# EUROPEAN PATENT APPLICATION

(11) **EP 4 461 800 A1**
(43) Date of publication of application: **13.11.2024**
(21) Application number: 22918805.7
(22) Date of filing: 20.12.2022
(51) Int. Cl.: C12G 1/14, C12G 3/04, A23L 2/00, A23L 2/52

(54) **WINE-FLAVOURED BEVERAGE**

(30) Priority: 07.01.2022 JP 2022001695
(71) Applicant: Suntory Holdings Limited, Osaka 530-8203 (JP)
(72) Inventor: KATAOKA, Shun, Kawasaki-shi, Kanagawa 211-0067 (JP); NAKAMURA, Yuri, Kawasaki-shi, Kanagawa 211-0067 (JP)
(74) Representative: Vossius & Partner Patentanwälte Rechtsanwälte mbB
(86) International application number: PCT/JP2022/046772
(87) International publication number: WO 2023/132220

(57) **Abstract**

An object of the present invention is to provide a non-alcoholic or low-alcoholic wine flavor beverage having enhanced wine-like full body. The sodium content of the beverage is adjusted so as to be within a certain range.

## Description

### TECHNICAL FIELD

The present invention relates to a non-alcoholic or low-alcoholic wine flavor beverage, and a method relating thereto.

### BACKGROUND ART

Non-alcoholic or low-alcoholic beverages are popular particularly among young people nowadays. In such a trend, non-alcoholic or low-alcoholic wine flavor beverages are being developed.

For example, PTL 1 discloses a technique for providing a wine flavor beverage, particularly a non-alcoholic or low-alcoholic wine flavor beverage, that has improved and enhanced wine-like flavor by regulating the composition of organic acids to. PTL 2 discloses a technique for giving an impression of a fermented product to a wine flavor beverage by regulating the contents of specific higher alcohols and fatty acid esters.

### CITATION LIST

### PATENT LITERATURE

PTL 1: JP 2013-255490A
PTL 2: JP 2021-106526A

### SUMMARY OF INVENTION

### TECHNICAL PROBLEM

An object of the present invention is to enhance wine-like full body of a non-alcoholic or low-alcoholic wine flavor beverage.

### SOLUTION TO PROBLEM

The non-alcoholic or low-alcoholic wine flavor beverages have distinct acid teste due to its smaller alcoholic strength, and it is therefore necessary to lower the acidity. On the other hand, a wine flavor beverage having a lower acidity has insufficient full body, and is therefore watery, unfortunately. Under these circumstances, the inventors of the present invention have found as a result of their earnest studies that when the sodium content of a non-alcoholic or low-alcoholic wine flavor beverage having a lower acidity is adjusted so as to be within a certain range, the wine-like full body of the beverage can be enhanced, thus achieving the present invention.

Specifically, the present invention relates to the following, but is not limited thereto.
[1] A wine flavor beverage having an alcohol content of less than 3 v/v%, an acidity, in terms of tartaric acid, of 0.22 to 0.48 g/100 ml, and a sodium content of 70 to 950 mg/kg.
[2] The beverage according to [1], wherein the acidity, in terms of tartaric acid, is 0.25 to 0.45 g/100 ml.
[3] The beverage according to [1] or [2], wherein the sodium content is 100 to 850 mg/kg.
[4] The beverage according to any one of [1] to [3], wherein the beverage has a magnesium content of 50 mg/kg or less.
[5] The beverage according to any one of [1] to [4], wherein the beverage has a weight ratio of sodium to magnesium, sodium/magnesium, of 10 or more.
[6] A method for enhancing wine-like full body of a wine flavor beverage having an alcohol content of less than 3 v/v% and an acidity, in terms of tartaric acid, of 0.22 to 0.48 g/100 ml, the method comprising
   the step of mixing ingredients such that the beverage has a sodium content of 70 to 950 mg/kg.

### ADVANTAGEOUS EFFECTS OF INVENTION

The present invention can enhance wine-like full body of a non-alcoholic or low-alcoholic wine flavor beverage. Herein, "wine-like full body" means to have depth, body, richness, and thickness like those of an alcoholic beverage and also to give soft mouthfeel and refreshing aftertaste. The soft mouthfeel and refreshing aftertaste are features of the wine-like full body other alcoholic beverages do not have.

### DESCRIPTION OF EMBODIMENTS

The beverage of the present invention and a method relating thereto will be described below. Unless otherwise noticed, "ppm" as used herein means ppm in terms of weight/volume (w/v), which has the same meaning as of "mg/L."

### (Wine flavor beverage)

The present invention relates to a wine flavor beverage having an alcohol content of less than 3 v/v%.

The "wine flavor beverage" herein refers to a beverage having wine-like flavor. The "wine" herein means an alcoholic beverage that is produced by fermenting mainly grape juice.

The wine flavor beverage of the present invention may be a beverage that has undergone fermentation by yeast or may not, as long as it has wine flavor. It may be a beverage that has undergone fermentation by a microorganism other than yeast, such as Lactic acid bacteria and oil-producing bacteria. It may also contain alcohol or may not. Examples of such beverages include a beverage containing wine; a beverage containing a wine extract obtained by concentrating wine; a beverage obtained by dealcoholization of wine and a beverage containing it; a beverage obtained by lactic fermentation of a fruit juice and a beverage containing it; and a beverage that imitates a taste of wine with a flavoring agent without use of wine or a wine extract. The method for producing the beverage and the ingredients and materials of the beverage are not particularly limited as long as the beverage has wine flavor.

The wine flavor beverage may be a beverage with red wine flavor or a beverage with white wine flavor. In either case, wine-like full body enhances the wine-likeness.

### (Alcohol)

Herein, the alcohol refers to ethyl alcohol (ethanol), unless otherwise noticed.

The wine flavor beverage of the present invention is a low-alcoholic or non-alcoholic beverage, and has an alcohol content of less than 3 v/v%. The alcohol content may be 2 v/v% or less, 1 v/v% or less, or 0.00 v/v%.

The alcohol content in the present invention may be measured by any known method, for example, with a vibrating densimeter. Specifically, carbon dioxide is removed from the beverage by filtration or ultrasonic waves as needed to prepare a sample. The sample is subjected to steam distillation. Then, the density at 15°C of the resulting distillate is measured and converted to an alcohol content according to Table 2 "Conversion among Alcohol Content, Density (15°C) and Specific Gravity (15/15°C)" which is annexed to the Official Analysis Method of the National Tax Agency in Japan (National Tax Agency Directive No. 6 in 2007, revised on June 22, 2007). Alternatively, the alcohol content may be measured using gas chromatography, in cases where the content is extremely small.

Any liquor can be used as a source of the alcohol for the beverage of the present invention. The liquor that can be used for this purpose is not particularly limited as long as it is drinkable as a general liquor, and examples thereof include distilled liquors such as whiskey, vodka, rum, shochu, and spirits; brewed beverage such as sake, wine, and beer; and mixed liquors such as liqueur.

### (Acidity)

The acidity, in terms of tartaric acid, of the beverage of the present invention is 0.22 to 0.48 g/100 ml. For the upper limit, the content may be 0.47 g/100 ml or less, 0.46 g/100 ml or less, or 0.45 g/100 ml or less. The lower limit of the acidity of the beverage of the present invention is not particularly limited, and the content is preferably 0.23 g/100 ml or more, more preferably 0.24 g/100 ml or more, and particularly preferably 0.25 g/100 ml or more. The non-alcoholic or low-alcoholic wine flavor beverage that has an acidity within the above-described range is preferred in light of the acid taste of the beverage.

The "acidity" herein refers to the value obtained by converting the total molar concentration of the acids in the beverage to tartaric acid concentration, on the assumption that the acids are all monoacids. In cases of carbonated beverages, it means the acidity after degasification. The total molar concentration of the acids in the beverage as a sample can be measured by a known method such as titration, and for example, it can be calculated from the amount of sodium hydroxide added that is necessary to allow the sample become neutral (pH 7.0). In detail, 20 mL of a sample is placed in a 100 mL beaker with a volumetric pipette. Distilled water was added thereto so that the amount of the liquid reaches about 50 mL, and the electrode of a pH meter is put in the liquid. Then, a 1/10 N sodium hydroxide solution was dropped from a burette while the solution is stirred, and the time when the scale of the pH meter indicates 7.0 is the end point. Then, the total molar concentration of the acids in the sample is determined from the amount of the sodium hydroxide solution added that is necessary to reach the end point. Furthermore, taking into consideration the found total molar concentration of the acids and the molecular weight and the number of the carboxylic acids of tartaric acid (for the sake of clarity, it means free tartaric acid herein), the acidity of the sample is calculated on the basis of the following equation: acidity = total molar concentration of acids in sample x (molecular weight of tartaric acid/ number of carboxylic acids of tartaric acid). It is considered that the acidity represents the degree of the acid taste of a wine flavor beverage. Adjustment of the acidity can be carried out by any known method such as addition of an acid or dilution. An automatic titrator may be used for the titration in determination of the acidity.

Typical examples of the acid contained in the beverage of the present invention include citric acid, malic acid, lactic acid, phosphoric acid, and tartaric acid. In particular, citric acid, malic acid, and tartaric acid are preferable.

### (Sodium)

The beverage of the present invention includes sodium. The sodium content of the beverage of the present invention is 70 to 950 mg/kg. The content may be 80 to 850 mg/kg, 100 to 850 mg/kg, or 100 to 650 mg/kg. For the lower limit, the content may be 100 mg/kg or more, 150 mg/kg or more, 200 mg/kg or more, or 250 mg/kg or more, in one embodiment. A sodium content within an appropriate range can enhance wine-like full body of a non-alcoholic or low-alcoholic wine flavor beverage having a lowered acidity.

In the present invention, it is possible to add to the beverage sodium in the form of a salt that can be used for beverages and foods. Examples of the salt for incorporating sodium into the beverage of the present invention include trisodium citrate, sodium chloride, sodium gluconate, monosodium succinate, disodium succinate, sodium acetate, sodium DL-tartrate, sodium L-tartrate, sodium lactate, monosodium fumarate, and sodium DL-malate. Thus, in one embodiment, the beverage of the present invention contains one or more substance selected from the group consisting of trisodium citrate, sodium chloride, sodium gluconate, monosodium succinate, disodium succinate, sodium acetate, sodium DL-tartrate, sodium L-tartrate, sodium lactate, monosodium fumarate, and sodium DL-malate.

To add sodium to the beverage, an ingredient containing sodium or a sodium salt may be added to the beverage, including fruit juice, vegetable juice, natural water, and deep sea water.

In cases where the sodium contained in the present invention is in the form of a sodium salt, its amount can be converted into the amount of its free form to calculate the sodium content of the beverage. The sodium content or concentration of the beverage (solution as a sample) of the present invention can be measured by a known method using an ICP emission spectrophotometer.

### (Magnesium)

The beverage of the present invention may further include magnesium. The magnesium content of the beverage of the present invention is preferably 50 mg/kg or less, more preferably 40 mg/kg or less, and particularly preferably 30 mg/kg or less. A magnesium content within an appropriate range can enhance wine-like full body of a non-alcoholic or low-alcoholic wine flavor beverage having a lowered acidity and an adjusted sodium content within a certain range.

In the present invention, it is possible to add, to the beverage, magnesium in the form of a salt that can be used for beverages and foods. Examples of the salt for incorporating magnesium into the beverage of the present invention include magnesium chloride, magnesium acetate, and magnesium sulfate. Thus, in one embodiment, the beverage of the present invention may contain one or more substance selected from the group consisting of magnesium chloride, magnesium acetate, and magnesium sulfate.

To add magnesium to the beverage, an ingredient containing magnesium or a magnesium salt may also be added to the beverage, including fruit juice, vegetable juice, tea, natural water, and deep sea water.

In cases where the magnesium used in the present invention is in the form of a salt, its amount can be converted into the amount of its free form to calculate the magnesium content of the beverage. The magnesium content or concentration of the beverage (solution as a sample) according to the present invention can be measured by a known method using an ICP emission spectrophotometer.

### (Weight ratio of sodium to magnesium: sodium/magnesium)

The weight ratio of sodium to magnesium contained in the beverage of the present invention (sodium/magnesium) is preferably 10 or more, more preferably 10 to 150, further preferably 10 to 140, and even more preferably 10 to 100. Such a weight ratio can more enhance wine-like full body.

### (Brix)

The term "Brix" herein means the weight (g) of dissolved solids per 100 g of solution, which is generally determined by measuring a refractive index at 20°C using, for example, a saccharimeter or refractometer and converting it to a mass/mass percentage of a sucrose solution on the basis of the conversion table according to ICUMSA (International Commission for Uniform Methods of Sugar Analysis). A smaller Brix value of a beverage means a smaller concentration of dissolved solids including carbohydrates.

In a preferable embodiment, the beverage of the present invention has a smaller carbohydrate content, and its Brix value is 5.8 or less, and more preferably 1.0 to 5.8. A beverage having such a small carbohydrate content generally tends to have insufficient full body; however, the present invention can provide excellent wine flavor in such cases.

### (Carbon dioxide)

The beverage of the present invention may contain carbon dioxide. The carbon dioxide can be introduced into the beverage by a general method known to those skilled in the art. For example, carbon dioxide may be dissolved in the beverage under pressure; carbon dioxide may be mixed with the beverage in a line using a mixer such as a carbonator available from GEA Tuchenhagen; the beverage may be sprayed into a tank filled with carbon dioxide so that the beverage absorbs the carbon dioxide; or the beverage may be mixed with carbonated water; however, the method is not limited thereto. The carbon dioxide pressure is adjusted by using these means as appropriately.

In cases where the beverage of the present invention contains carbon dioxide, the carbon dioxide pressure thereof is not particularly limited, and preferably 0.7 to 4.5 kgf/cm², more preferably 0.8 to 2.8 kgf/cm². In the present invention, the carbon dioxide pressure can be measured using a gas volume analyzer GVA-500A manufactured by KYOTO ELECTRONICS MANUFACTURING CO., LTD. For example, the temperature of a sample is adjusted to 20°C; in the gas volume analyzer, air is removed (sniffed) from the container, followed by shaking; and then the carbon dioxide pressure is measured. Unless otherwise noticed, the carbon dioxide pressure herein means a carbon dioxide pressure at 20°C.

### (Other ingredients)

In addition, any additives commonly incorporated into beverages may be incorporated into the beverage of the present invention, including flavors, vitamins, dyes, antioxidants, preservatives, seasonings, extracts, pH adjusters, and quality stabilizers, as long as they do not impair the effect of the present invention.

In one embodiment, the beverage of the present invention is free of any high-intensity sweetener, or has a content thereof as small as possible, in view of pursuing a more natural taste. For example, the high-intensity sweetener content of the beverage may be 110 ppm or less. This concentration can be measured by a known method such as HPLC method.

The term "high-intensity sweetener" as used herein encompasses natural sweeteners and synthesized sweeteners that have a stronger sweetness than sucrose (for example, that is several to several hundred times sweeter than sucrose). Examples of such a high-intensity sweetener include peptide sweeteners, such as aspartame and allitame; glycoside sweeteners, such as stevia sweeteners (including stevia extract, and enzymatically treated stevia obtained by enzymatically treating stevia and adding glucose to the resultant, and Rebaudioside A, which has the best sweetness among sweet components of stevia) and Glycyrrhiza extract; sucrose derivatives, such as sucralose; and synthetic sweeteners, such as acesulfame K and saccharin.

### (Packed beverage)

The beverage of the present invention can be provided in a packed form. Examples of the form of a container for packing include, but not limited to, a metal container such as a can, a PET bottle, a paper container, a bottle, and a pouch. A sterilized and packed product can be produced by, for example, a method including filling the beverage of the present invention into a container and then carrying out heat sterilization such as retort sterilization, or a method including sterilizing the beverage and then filling it into a container.

### (Method)

Another aspect of the present invention is a method for producing a wine flavor beverage. The method includes the step of mixing ingredients such that the beverage has a sodium content of 70 to 950 mg/kg. The ingredients include a sodium-containing material (such as a sodium salt and a fruit juice), and water, if necessary. The method may also include the step of mixing the ingredients such that the beverage has a magnesium content of 50 mg/kg or less, and the ingredients include a magnesium-containing material (such as a magnesium salt or a fruit juice), and water, if necessary. Other ingredients are obvious from the description for the beverage hereinabove. This method can enhance wine-like full body of a wine flavor beverage having an alcohol content of less than 3 v/v% and an acidity, in terms of tartaric acid, of 0.22 to 0.48 g/100 ml, and accordingly, in another aspect, the method is also a method for enhancing wine-like full body of the above-described beverage.

The method for adjusting the sodium content and the magnesium content of the beverage is obvious from the description for the beverage hereinabove. The timing thereof is not limited. For example, the above-described steps may be carried out simultaneously or separately, or the steps may be swapped for each other in the order. The beverage finally obtained may satisfy the above-described requirements. The preferred ranges of the contents of the above-described ingredients, etc. are as described above for the beverage. Specific examples and amounts of other additional ingredients and parameters are also as described above for the beverage.

### (Numeric range)

For the sake of clearness, a numeric range herein includes its limits, or in other words, the lower limit and the upper limit. For example, a range represented by " 1 to 2" includes 1 and 2.

### EXAMPLES

The contents of the present invention will now be described in detail by way of Examples of the present invention, but the present invention is not limited to Examples below.

### (Example 1) Problems with non-alcoholic wine flavor beverage in terms of acidity and full body, and influence of sodium

First, with water were mixed a given amount of a wine extract (obtained from white wine: 1 g/kg sample of the resulting beverage), a sodium salt (trisodium citrate), a magnesium salt (magnesium chloride), an acidifier (malic acid), a flavoring agent, and a sweetener (sucrose) to prepare beverage samples according to the formulations shown in Table 1 below. Since trisodium citrate and magnesium chloride each have a smaller impact of the taste of the salt itself, they were selected and used as the sodium salt and magnesium salt for the experiment as described above. In each beverage sample, the alcohol content was 0.00 v/v%, and the Brix was about 4.0.

On the beverages obtained, sensory evaluation was made by trained specialist members of a panel to evaluate "wine-like full body" and "acidity" of each beverage sample. For each evaluation item, the specialist members rated samples on a 5-point scale (the evaluation scale was as shown below), and the average was obtained from the resulting evaluation scores for each evaluation item. For "wine-like full body," an average of 2.5 or more was regarded as a passing score, and for "acidity," an average of 2.5 or less was regarded as a passing score. Results are shown in Table 1. In order to reduce differences in evaluations among individuals, the specialist members established a common perception of the relationship between the evaluation scores and tastes in advance, using standard samples corresponding to respective evaluation scores.

### <Wine-like full body>

5: Full body is felt strongly.
4: Full body is sensed very much.
3: Full body is sensed.
2: Full body is rather lacked.
1: Full body is lacked.

### <Acidity>

5: Acidity is strong very much.
4: Acidity is strong.
3: Wine-like acidity is rather felt.
2: Wine-like acidity is felt.
1: Wine-like acidity is much sensed.

**[Table 1]**

| Beverage sample | 1 | 2 | 3 | 4 | 5 | 6 | 7 | 8 | 9 | 10 |
|---|---|---|---|---|---|---|---|---|---|---|
| Sodium content [mg/kg] | 60 | 60 | 120 | 200 | 300 | 400 | 800 | 1000 | 1503 | 120 |
| Magnesium content [mg/kg] | 8.3 | 8.3 | 8.3 | 8.3 | 8.3 | 8.3 | 8.3 | 8.3 | 8.3 | 8.3 |
| Sodium/magnesium weight ratio | 7.2 | 7.2 | 14.4 | 24.0 | 36.0 | 48.0 | 96.0 | 120.0 | 180.1 | 14.4 |
| Acidity (in terms of tartaric acid) [g/100 ml] | 0.50 | 0.40 | 0.40 | 0.40 | 0.40 | 0.40 | 0.40 | 0.40 | 0.40 | 0.20 |
| Wine-like full body | 3.00 | 2.25 | 2.75 | 3.50 | 4.25 | 3.50 | 2.50 | 1.75 | 1.50 | 1.25 |
| Acid taste | 4.00 | 2.75 | 2.50 | 2.50 | 2.25 | 2.00 | 1.75 | 1.50 | 1.25 | 1.25 |

It was first found that a non-alcoholic wine flavor beverage had a distinct acid taste (see beverage sample 1), and that when the acidity was lowered, the wine-like full body was insufficient (see beverage sample 2). It was shown that it was possible to enhance the wine-like full body of such a beverage by adjusting the sodium content so as to be within a range from 70 to 950 mg/kg (see beverage samples 3 to 7). In addition, it was also seen that the wine-like full body was insufficient when the sodium content was too large or when the acidity was too low (see beverage samples 8 to 10).

### (Example 2) Influence of sodium content, magnesium content, and sodium/magnesium ratio on acid taste and full body of non-alcoholic wine flavor beverage

Next, with water were mixed a given amount of a wine extract (obtained from white wine: 1 g/kg sample of the resulting beverage), a sodium salt (trisodium citrate), a magnesium salt (magnesium chloride), an acidifier (malic acid), a flavoring agent, and a sweetener (sucrose) to prepare beverage samples according to the formulations shown in Table 2 below. In each beverage sample, the alcohol content was 0.00 v/v%, the acidity (in terms of tartaric acid) was 0.30 g/100 ml, and the Brix was about 3.1. Then, on the beverages obtained, sensory evaluation was made in the same manner as in Example 1. Results are shown in Table 2.

**[Table 2]**

| Beverage sample | 11 | 12 |
|---|---|---|
| Sodium content[mg/kg] | 400 | 400 |
| Magnesium content[mg/kg] | 20 | 40 |
| Sodium/magnesium weight ratio | 20 | 10 |
| Wine-like full body | 3.00 | 2.50 |
| Acid taste | 2.00 | 2.00 |

It was shown that wine-like full body was more increased in a wine flavor beverage having a sodium content and an acidity within respective certain ranges when the beverage had a smaller magnesium content or a higher sodium/magnesium ratio, as stated hereinabove.

### (Example 3) Influence of sodium content, magnesium content, and sodium/magnesium ratio on acid taste and full body of low-alcoholic wine flavor beverage

A commercially available red wine and white wine made in Chile were each about 13-fold diluted to adjust the alcohol content to about 1.0 v/v%. Then, to each of diluted wines (red and white) were added a sodium salt (trisodium citrate), a magnesium salt (magnesium chloride), and an acidifier (malic acid) to prepare beverage samples according to the formulations shown in Table 3 below. In each sample, the acidity (in terms of tartaric acid) was 0.40 g/100 ml, and the Brix was about 3.6. Then, on the beverages obtained, sensory evaluation was made in the same manner as in Example 1. Results are shown in Table 3.

**[Table 3]**

| Beverage sample | Red wine-based | | White wine-based | |
|---|---|---|---|---|
| | 13 | 14 | 15 | 16 |
| Sodium content[mg/kg] | 60 | 400 | 60 | 400 |
| Magnesium content[mg/kg] | 8.3 | 8.3 | 8.3 | 8.3 |
| Sodium/magnesium weight ratio | 7.2 | 48.0 | 7.2 | 48.0 |
| Wine-like full body | 2.00 | 4.25 | 1.25 | 3.50 |
| Acid taste | 3.00 | 2.50 | 3.00 | 2.50 |

It was shown that it was possible to enhance wine-like full body also in a low-alcoholic wine flavor beverage by adjusting the sodium content so as to be within a certain range as in Example 1 (see beverage samples 14 and 16). It was also found that the similar results were obtained for both a white wine-based beverage and a red wine-based beverage.

## Claims

1. A wine flavor beverage having an alcohol content of less than 3 v/v%, an acidity, in terms of tartaric acid, of 0.22 to 0.48 g/100 ml, and a sodium content of 70 to 950 mg/kg.

2. The beverage according to claim 1, wherein the acidity, in terms of tartaric acid, is 0.25 to 0.45 g/100 ml.

3. The beverage according to claim 1 or 2, wherein the sodium content is 100 to 850 mg/kg.

4. The beverage according to any one of claims 1 to 3, wherein the beverage has a magnesium content of 50 mg/kg or less.

5. The beverage according to any one of claims 1 to 4, wherein the beverage has a weight ratio of sodium to magnesium, sodium/magnesium, of 10 or more.

6. A method for enhancing wine-like full body of a wine flavor beverage having an alcohol content of less than 3 v/v% and an acidity, in terms of tartaric acid, of 0.22 to 0.48 g/100 ml, the method comprising
the step of mixing ingredients such that the beverage has a sodium content of 70 to 950 mg/kg.
